# EUROPEAN PATENT APPLICATION

(11) **EP 4 629 027 A1**
(43) Date of publication of application: **08.10.2025**
(21) Application number: 25163379.8
(22) Date of filing: 13.03.2025
(51) Int. Cl.: G06F 1/3203, G10L 19/22, H04L 65/756, H04N 19/00, H04W 52/02

(54) **POWER SAVING FOR AUDIO STREAMS**

(30) Priority: 05.04.2024 FI 20245421
(71) Applicant: Nokia Solutions and Networks Oy, 02610 Espoo (FI)
(72) Inventor: PIHLAJAKUJA, Tapani, Kellokoski (FI); LEHTINIEMI, Arto Juhani, Lempäälä (FI); LAAKSONEN, Lasse Juhani, Tampere (FI)
(74) Representative: Nokia EPO representatives

(57) **Abstract**

Examples of the disclosure relate to power saving for audio streams during communication sessions. In examples an apparatus is configured to provide an audio stream to a participant device during a communication session with at least the participant device wherein the audio stream is provided in a first configuration and the first configuration provides one or more audio characteristics. The apparatus receives an indication from the participant device that the participant device is to enter or has entered a power save mode and determines a second configuration for the audio stream. The second configuration reduces power consumption of the participant device and maintains at least one of the one or more audio characteristics of the first configuration within a target range. The apparatus is also configured to switch the configuration used for the audio stream from the first configuration to the second configuration.

## Description

### TECHNOLOGICAL FIELD

Examples of the disclosure relate to power saving for audio streams. Some relate to power saving for audio streams during communication sessions.

### BACKGROUND

Audio applications such as teleconferencing can obtain audio signals from different sources or capture setups. These different signals can be mixed together to generate an audio stream that can be sent to participants in the teleconference or other audio application. The configuration used for the audio streams that are sent to participants can be selected to provide a good audio experience for a user.

### BRIEF SUMMARY

According to various, but not necessarily all, examples of the disclosure there is provided an apparatus comprising means for:
providing an audio stream to a participant device during a communication session with at least the participant device wherein the audio stream is provided in a first configuration and the first configuration provides one or more audio characteristics;
receiving an indication from the participant device that the participant device is to enter or has entered a power save mode;
determining a second configuration for the audio stream wherein the second configuration reduces power consumption of the participant device and maintains at least one of the one or more audio characteristics of the first configuration within a target range; and
switching the configuration used for the audio stream from the first configuration to the second configuration.

The first configuration may comprise a first format and the second configuration may comprise a second format.

The first configuration may comprise first parameters within a format and the second configuration may comprise second parameters within the same format.

The parameters may comprise at least one of:
bit rates;
audio bandwidth; or
content within metadata.

Determining a second configuration may comprise selecting a configuration from multiple available configurations wherein the selection is based, at least in part, on estimated power use.

The multiple available configurations may be negotiated during a session negotiation with the participant device.

Determining a second configuration may comprise selecting a configuration from one or more configurations requested by the participant device.

The second configuration may be selected based on at least one of:
a transmission format used for audio signals received by the apparatus;
decoding capabilities of the participant device;
rendering capabilities of the participant device;
estimated duration of a communication session; or
analysis of content of the audio signals.

The means may be for determining a third configuration for the audio stream wherein the third configuration further reduces power consumption for the participant device and switching the configuration used for the audio stream from the first configuration to the second configuration at a first time and the means are also for switching the configuration used for the audio stream from the second configuration to the third configuration at a second time.

The means may be for enabling an indication of the change of configuration to be sent to one or more other devices involved in the communication session.

The audio characteristics may comprise at least one of:
spatial audio; or
perceived audio quality metrics.

The first configuration may enable spatial based features.

The second configuration does not enable spatial based features.

The spatial based features may comprise at least one of:
head tracking; or
reverberation.

According to various, but not necessarily all, examples of the disclosure there is provided a method comprising:
providing an audio stream to a participant device during a communication session with at least the participant device wherein the audio stream is provided in a first configuration and the first configuration provides one or more audio characteristics;
receiving an indication from the participant device that the participant device is to enter or has entered a power save mode;
determining a second configuration for the audio stream wherein the second configuration reduces power consumption of the participant device and maintains at least one of the one or more audio characteristics of the first configuration within a target range; and
switching the configuration used for the audio stream from the first configuration to the second configuration.

According to various, but not necessarily all, examples of the disclosure there is provided a computer program comprising instructions which, when executed by an apparatus, cause the apparatus to perform at least:
providing an audio stream to a participant device during a communication session with at least the participant device wherein the audio stream is provided in a first configuration and the first configuration provides one or more audio characteristics;
receiving an indication from the participant device that the participant device is to enter or has entered a power save mode;
determining a second configuration for the audio stream wherein the second configuration reduces power consumption of the participant device and maintains at least one of the one or more audio characteristics of the first configuration within a target range; and
switching the configuration used for the audio stream from the first configuration to the second configuration.

According to various, but not necessarily all, examples of the disclosure there is provided a participant device comprising means for:
receiving an audio stream from an apparatus during a communication session with at least the apparatus wherein the audio stream is provided in a first configuration and the first configuration provides one or more audio characteristics;
determining to enter a power save mode;
enabling transmission of an indication that the participant device is to enter or has entered a power save mode to the apparatus;
receiving the audio stream in a second configuration wherein the second configuration reduces power consumption of the participant device and maintains at least one of the one or more audio characteristics of the first configuration.

The means may be for determining one or more configurations that can be used as the second configuration and enabling transmission of an indication of the determined configurations to the apparatus.

Configurations that can be used as the second configuration may be be determined based, at least in part, on one or more of;
configurations negotiated during a session negotiation;
decoding capabilities of the participant device;
rendering capabilities of the participant device; or
estimated duration of a communication session.

According to various, but not necessarily all, examples of the disclosure there is provided a method comprising:
receiving an audio stream from an apparatus during a communication session with at least the apparatus wherein the audio stream is provided in a first configuration and the first configuration provides one or more audio characteristics;
determining to enter a power save mode;
enabling transmission of an indication that the participant device is to enter or has entered a power save mode to the apparatus;
receiving the audio stream in a second configuration wherein the second configuration reduces power consumption of the participant device and maintains at least one of the one or more audio characteristics of the first configuration.

According to various, but not necessarily all, examples of the disclosure there is provided a computer program comprising instructions which, when executed by an apparatus, cause the apparatus to perform at least:
receiving an audio stream from an apparatus during a communication session with at least the apparatus wherein the audio stream is provided in a first configuration and the first configuration provides one or more audio characteristics;
determining to enter a power save mode;
enabling transmission of an indication that the participant device is to enter or has entered a power save mode to the apparatus;
receiving the audio stream in a second configuration wherein the second configuration reduces power consumption of the participant device and maintains at least one of the one or more audio characteristics of the first configuration.

According to various, but not necessarily all, embodiments there is provided an apparatus comprising
at least one processor; and
at least one memory including computer program code;
the at least one memory storing instructions that, when executed by the at least one processor, cause the apparatus to perform at least a part of one or more methods described herein.

According to various, but not necessarily all, embodiments there is provided an apparatus comprising means for performing at least part of one or more methods described herein. The description of a function and/or action should additionally be considered to also disclose any means suitable for performing that function and/or action. Functions and/or actions described herein can be performed in any suitable way using any suitable method.

According to various, but not necessarily all, embodiments there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all the features described in respect of other examples of the disclosure, and vice versa. Also, it is to be appreciated that any one or more or all the features, in any combination, may be implemented by/comprised in/performable by an apparatus, a method, and/or computer program instructions as desired, and as appropriate. The description of a function should additionally be considered to also disclose any means suitable for performing that function

### BRIEF DESCRIPTION

Some examples will now be described with reference to the accompanying drawings in which:
FIGS. 1A and 1B show example use case scenarios;
FIGS. 2A and 2B show example methods;
FIGS. 3A to 3D show an example implementation;
FIGS. 4A to 4E show an example implementation; and
FIG. 5 shows an example apparatus.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Corresponding reference numerals are used in the figures to designate corresponding features. For clarity, all reference numerals are not necessarily displayed in all figures.

### DETAILED DESCRIPTION

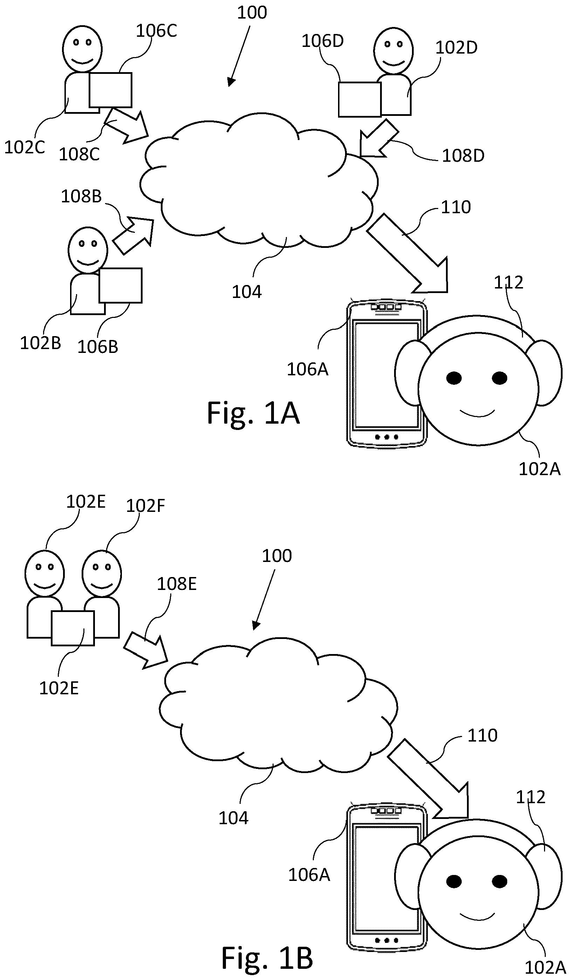

Figs. 1A and 1B show example use case scenarios for implementations of the disclosure. These example use case scenarios make use of the immersive voice and audio services (IVAS) codec. Other use cases scenarios could also be used. Other codecs could be used in other examples.

Figs. 1A and 1B show example telecommunication systems 100. The telecommunication systems 100 are used to enable a telecommunication session between multiple participants 102. The participants 102 can be users of participant devices 106. The telecommunication systems 100 comprise a server 104 and multiple participant devices 106. The respective participant devices 106 can be used by one or more participants 102.

Fig. 1A shows a telecommunication system 100 being used for a telecommunication session between four participants 102. Each of the participants 102 is using a participant device 106. The participant devices 106 can comprise any suitable type of devices. The participant devices 106 could comprise teleconferencing devices, mobile telephones, personal computers or any other suitable type of devices that can be configured to capture audio and provide playback of audio signals to one or more participants 102.

The participant devices 106 are configured to send upstream signals 108 to the server 104 and to receive an audio stream 110 from the server 104. The server 104 could be an edge server, a multipoint control unit (MCU) server or any other suitable type of server or device. The server 104 could be any device in the telecommunication system 100 that is configured to transcode a bitstream.

In Fig. 1A the server 104 is shown as a single entity. The server 104 could comprise multiple entities or components in some examples. The respective entities or components could be distributed within a network.

The server 104 is configured to receive upstream signals 108 from the participant devices 106 within the telecommunication system 100. The upstream signals 108 from the participant devices 106 could comprise content from the participants 102 associated with the respective participant devices 106. The content can comprise voice signals or any other suitable type of audio.

The server 104 is configured to mix the upstream signals 108 received from the multiple participant devices 106 to generate an audio stream 110. The server 104 can then provide the audio stream 110 that can be provided to a participant device 106.

Fig. 1A shows an audio stream 110 being provided to a first participant device 106A. It is to be appreciated that corresponding streams would also be generated for the other participant devices 106B-D within the telecommunication system 100. In this example a second participant device 106B, a third participant device 106C and a fourth participant device 106D all send upstream signals 108 to the server 104. The upstream signals 108 can be sent in any suitable format or configuration. The different participant devices 106B-D can send the audio signals in different formats or different configurations. The formats or configurations that are to be used can be established during a session negotiation.

In the example of Fig. 1A the second participant device 106B can send an upstream signal 108B in a First Order Ambisonics (FOA) format, the third participant device 106C can send an upstream signal 108C in a Mono format and the fourth participant device 106D can send an upstream signal 108D in a Higher Order Ambisonics (HOA3) format. Other formats and configurations could be used in other examples.

The server 104 is configured to decode the received upstream signals 108B-D from the participant devices 106B-D and mix the decoded signals into a selected format or configuration. The mixed signal can then be encoded for transmission to the first participant device 106. The first participant device 106A therefore receives an audio stream 110 comprising content from the other participant devices 106B-106D in the telecommunication system 100.

The audio stream 110 can be mixed into any suitable format or configuration. In this example the audio stream 110 can be provided in a HOA3 format. The format or configuration that is to be used can be established during a session negotiation. Other formats or configurations could be used in other examples.

The first participant device 106A is configured to receive the packets in the audio stream 110. The first participant device 106A can decode the bitstream within the audio stream 110. The bitstream can be an IVAS bitstream or any other suitable type of bitstream. The first participant device 106A can render the signal using the appropriate format or configuration for playback to the participant 102A associated with the first participant device 106A.

In the example of Fig. 1A the audio stream 110 can be provided in a HOA3 configuration. This can enable spatial based features such as headtracking of binaural rendering or synthesizing room reverberation. However, the use of HOA3 can have a higher power usage compared to other formats or configurations.

In the example of Fig. 1A the first participant device 106A is a mobile phone. Other types of participant device 106A that enable communication within a telecommunication session can be used in other examples. In this example the user 102A is using a playback device 112 to listen to the audio. The playback device 112 can comprise a headset or any other suitable type of playback device. The playback device 112 can be connected to the participant device 106A via a wired or wireless connection. The headset 112 can be used to provide binaural audio to the participant 102. The binaural audio can comprise spatial features which can be important for providing a high quality user experience.

Fig. 1B shows another example telecommunication system 100. The telecommunication system 100 of Fig. 1B is similar to the telecommunication system 100 of Fig. 1A and corresponding reference numerals are used for corresponding features.

In the example of Fig. 1B the telecommunication system 100 is used for a telecommunication session between two participant devices 106A and 106E. The first participant device 106A is used by a first participant 102A and the other participant device 106E is used by multiple participants 102E, 102F. The other participant device 106E could be a teleconferencing device that can enable multiple participants within the same room to use the same device or could be any other suitable type of device. In the example of Fig. 1B two participants 102E, 102F are using the other participant device 106E. More than two participants 102 can use the same participant device 106 in other examples. The multiple participants 102 can provide multiple sucres within the upstream signal 108E.

The other participant device 106E can send an upstream signal 108E to the server 104. The upstream signal 108E can be sent using any suitable format or configuration, e.g., Higher Order Ambisonics (HOA3) format. The format that is used can enable spatial information of the sources in the upstream signal 108 to be retained. This can help to provide a higher quality user experience. Other formats and configurations could be used in other examples.

The server 104 is configured to receive the upstream signal 108E and send the audio stream 110 to the first participant device 106A. The audio stream 110 can be mixed into any suitable format or configuration. In this example the audio stream 110 can be provided in a HOA3 format. The format or configuration that is to be used can be established during a session negotiation. Other formats or configurations could be used in other examples.

The use of HOA3 can enable spatial audio to be used. This can enable the first participant 106A to perceive different audio sources to be in positioned in different directions. For example, a participant 102E could be positioned to the right of the participant device 106E and the participant 102F could be positioned to the left of the participant device 106E. In some examples the participant 102E could be positioned to the right of the participant 106A and the participant 102F could be positioned to the left of the participant 106A. This could allow the first participant device 106A to be in a pocket or other locations and the positions of the participants 102E, 102F can be determined relative to the headphones. Other relative positions of the participants and devices can be used in other examples.

The use of HOA3 can enable spatial based features such as headtracking of binaural rendering or synthesizing room reverberation. However, the use of HOA3 can have a higher power usage compared to other formats or configurations.

The example systems 100 of Figs. 1A and 1B, and other systems 100 that implement examples of the disclosure, can make use of the immersive voice and audio services (IVAS) codec. The IVAS codec is an extension of the 3GPP Enhanced Voice Services (EVS) codec, and it includes this full functionality for bit-exact mono audio signal input processing. In addition, IVAS supports encoding and decoding of stereo and immersive audio formats such as multi-channel audio, scene-based audio (SBA, Ambisonics), metadata-assisted spatial audio (MASA), object-based audio (ISM), and combinations of object-based audio with MASA (OMASA) and object-based audio with SBA (OSBA).

Stereo input refers to audio representation, where a first channel of audio is assigned to a left channel and a second channel of audio is assigned to a right channel.

Multichannel (MC) audio refers to audio representation, where each transported channel represents an audio signal for a loudspeaker positioned around a listener. Example MC formats that can be supported by IVAS are surround formats 5.1 and 7.1 and surround formats with elevated speaker positions 5.1.2, 5.1.4 and 7.1.4.

Scene-based audio (SBA) input refers to Ambisonics-based audio representation. Ambisonics signals carry a representation of the audio scene, where the transport channels refer to capturing directions in a spherical domain. The first channel (W) represents the omnidirectional capture. The omnidirectional capture is the incoming sound field from all directions. The next three channels (X, Y, Z) represent the incoming sound from the corresponding spatial axes. These four channels form the first order Ambisonics (FOA) representation. A higher spatial accuracy can be achieved by increasing the number of capturing directions with more channels. This increases the order of the Ambisonics representation, referred to as higher order Ambisonics (HOA). Second order Ambisonics (HOA2) comprises nine channels, and third order (HOA3) comprises sixteen channels. IVAS supports first, second and third order Ambisonics. IVAS can furthermore differentiate, e.g., between FOA and Planar-FOA, where the height information is not provided.

MASA refers to a parametric spatial audio representation. MASA uses audio signal(s) together with corresponding spatial metadata. The spatial metadata can comprise information such as directions and direct-to-total energy ratios in time subframes and frequency bands or time-frequency (TF) tiles or any other suitable information. A MASA stream can be obtained by capturing spatial audio with microphones and then estimating the spatial metadata based on the microphone signals. In some examples a MASA stream can be obtained from other sources, such as specific spatial audio microphones (such as Ambisonics), studio mixes (such as., 5.1 mix) or other content by means of a suitable format conversion. Suitable format conversion may include audio signal selection or downmixing and spatial parameter analysis

Object-based audio, or Independent Streams with Metadata (ISM), input refers to audio representation, where individual mono audio object streams are transmitted. In addition to the transported audio, metadata describing the audio objects is transmitted. The metadata can comprise information such as the azimuth and elevation of the audio object or any other suitable information.

OMASA refers to an input comprising of MASA with additional object-based audio. The object based audio can comprise one or more objects. The object-based audio streams can be provided to an encoder as separate streams from the MASA stream, and these can be encoded together.

OSBA refers to an input comprising of SBA with additional object-based audio. The object based audio can comprise one or more objects. The object-based audio streams can be provided to an encoder as separate streams from the SBA stream, and these can be encoded together.

**The IVAS** codec can be implemented on a wide range of devices. Different devices will have different requirements in terms of balancing user experience, implementation complexity and cost, and power consumption.

In order to enable the different requirements in terms of balancing user experience, implementation complexity and cost, and power consumption to be met the IVAS framework defines multiple functionality levels of IVAS codec operations. The different levels enable rendering with different complexity and memory requirements.

The different levels can be built on each other so that a higher level comprises all features and functionalities of lower levels but with some additional features. For example, level one could be a core level, level two can comprise all of the features of level one and some additional features. Level three can comprise all of the features of level two and some additional features. Level three can be the highest level. The highest level can comprise the full set of IVAS codec features and functionalities. A device configured for IVAS shall support at least functionality level one.

The levels can be defined as follows:
The following level-dependent limits apply for IVAS codec operations (encoder/decoder/renderer total) excluding Jitter Buffer Management and other supplementary operations:
Level 1:
   ∘ Complexity <= 3 * EVS
   ∘ RAM <= 3 * EVS
Level 2:
   ∘ Complexity <= 6 * EVS
   ∘ RAM <= 6 * EVS
Level 3:
   ∘ Complexity <= 10 * EVS
   ∘ RAM <= 10 * EVS

Other definitions or indications of levels or general complexity-based device capabilities are possible.

Different formats or configurations can be classified within the different levels. There can be significant differences in complexity of the different formats or configurations that can be used. For example, one operation that can be performed in a first format in level one can provide a similar or substantially similar user experience to another operation that can be performed in a different format in level two or three which could have more than three times the complexity.

In telecommunications systems 100 the amount of power consumed by decoding and rendering audio varies based on the transmitted format or configuration and rendered output. More complex formats and configurations will require more power.

For a participant 102 in a telecommunication session it is important to maintain a connection to the telecommunication system 100 while receiving the best user experience. For instance, it might be important to maintain spatial rendering because this can improve the separation between sources, and this can improve the intelligibility of different sources. However, spatial rendering can also use high power consumption. However, the actual power consumption for the spatial rendering will depend upon the algorithm used for the spatial rendering algorithm and the format or configuration used for the transmitted audio stream 110.

As an illustrative example decoding an audio stream 110 in Scene Based Audio (SBA) format and rendering to binaural format, on the same bitrate, can use roughly triple the computation operations compared to a quality-equivalent MASA (Metadata Assisted Spatial Audio) format decoding and rendering (for some bitrate ranges).

In some use case scenarios it might be beneficial to transmit a more complex format or configuration because this can preserve the format or configuration through the transmission path. This can preserve quality and allow for all further processing steps that the original transmitted format would allow. However this would increase power consumption.

Examples of the disclosure address the problem of maintaining user experience in telecommunication systems 100 while enabling a reduction in power use for the participant devices 106. The reduction in power use could be needed because the participant device 106A might be arranged in a low power mode. In such cases switching to stereo or mono output would reduce power but would also impact on the user experience and so an improved solution is needed.

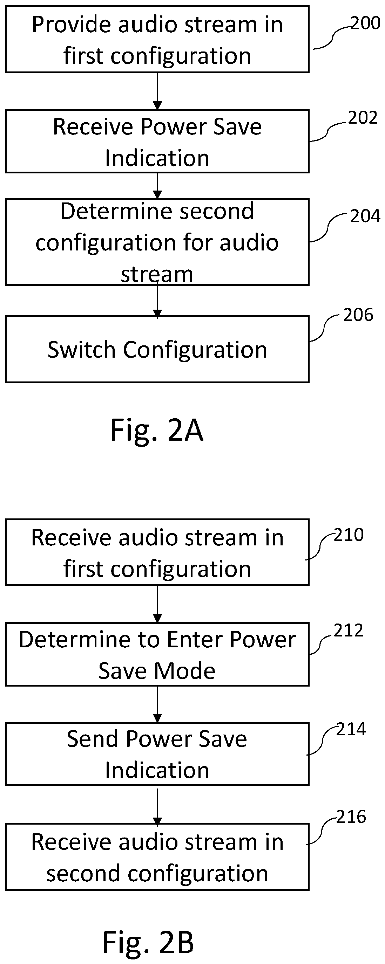

Fig. 2A shows an example method that can be used in examples of the disclosure. The example method could be implemented using telecommunication systems 100 such as the systems 100 of Figs.1A and 1B or any other suitable telecommunication system 100. The method of Fig. 2A could be implemented by a server 104 or an apparatus within a server 104 or a transmitting participant device 106B-E or any other suitable device.

At block 200 the method comprises providing an audio stream 110 to a participant device 106A during a communication session. The communication session can be with any number of participant devices 106, including at least the participant device 106A. The audio stream 110 can be formed by mixing inputs from the other participant devices 106 within the communication session.

The audio stream 110 is provided in a first configuration. The configuration can comprise the format that is used for the audio stream 110. Different formats can comprise multi-channel audio, scene-based audio (SBA, Ambisonics), metadata-assisted spatial audio (MASA), object-based audio (ISM), and combinations of object-based audio with MASA (OMASA) and object-based audio with SBA (OSBA) or any other suitable formats.

In some examples different configurations can comprise different parameters within the same format. The parameters that could be different for different configurations could comprise bit rates, audio bandwidth, content within metadata, and/or any other suitable parameters. The content within the metadata that could be changed could be for example coherence parameters which could be zeroed out or the number of concurrent directions could be reduced.

In some examples different configurations can be classified into different levels. Different configurations can be assigned into different levels based on the memory requirements and complexity of the processes within that configuration.

The first configuration can provide one or more audio characteristics. The audio characteristics could be a measure of perceived audio quality for a participant 102 that hears the audio stream after it has been rendered and played back. In some examples the audio characteristics could be spatial audio characteristics. The characteristics can relate to the perceived quality of the spatial audio characteristics.

In some examples the audio characteristics comprise spatial audio or perceived audio quality metrics or any other suitable characteristics.

At block 202 the method comprises receiving an indication from the participant device 106A that the participant device 106A is to enter or has entered a power save mode. The indication can be sent in response to a user input being detected by the participant device 106A. The user input can cause the participant device 106A to be arranged into a low power mode. In some examples the indication can be sent in response to a controller of the participant device 106A determining that the power level of the participant device 106A is below a given threshold or determining that the power level of the participant device 106A is estimated to fall below a given threshold during the expected duration of the telecommunication session. In some cases the indication can be sent automatically without any input from participant 102A using the participant device 106A.

In some examples the indication that the participant device 106A is to enter a power save mode can indicate when the participant device 106A is to enter the low power mode. In some examples the participant device 106A can be arranged to enter the low power mode immediately. In some examples the participant device 106A can be arranged to enter the low power mode at an identified time. The identified time can be within the expected duration of the telecommunication session.

At block 204 the method comprises determining a second configuration for the audio stream 110. The second configuration is different to the first configuration. In some examples the first configuration comprises a first format and the second configuration comprises a second format. In some examples the first configuration comprises first parameters within a format and the second configuration comprises second parameters within the same format. The parameters can comprise at least one of bit rates, audio bandwidth or content within metadata, or any other suitable parameters. In some examples the first configuration can be in a first level and a second configuration can be in a second level.

The second configuration reduces power consumption of the participant device 106 but maintains at least one of the one or more audio characteristics of the first configuration within a target range. The maintaining of the audio characteristics can comprise keeping one or more parameters of the audio characteristics above a threshold. For example, the maintaining of the audio characteristics can comprise some changes in the audio characteristics but any changes would be within a predetermined range so as to maintain the audio characteristics above a threshold. The amount of change that can be tolerated within the audio characteristics can depend on the power saving requirements of the participant device 106A and/or any other suitable factors.

In some examples the first configuration enables spatial based features. In some examples the second configuration does not enable spatial based features. In some examples the spatial based features comprise head tracking, reverberation or any other suitable feature.

In some examples determining a second configuration can comprise selecting a configuration from multiple available configurations. The multiple available configurations can be negotiated during a session negotiation with the participant device 106A. The session negation can be performed when the communication session is initiated or at any other suitable time.

In some examples determining a second configuration can comprise selecting a configuration from one or more configurations requested by the participant device 106A. The configurations can be requested in the message that indicates that the participant device 106A is to enter or has entered a low power mode or in any other suitable message.

The selection of the configuration can be based on one or more relevant factors. In some examples, at least one of the factors could be estimated power use of the participant device 106A. The estimated power use can be connected to the complexity of the configuration. The more complex the procedure for decoding and rendering the audio stream 110 the more power will be used by the participant device 106A. Therefore, the second configuration that is used for lower power modes can have a lower complexity than the first configuration.

It is possible that in some examples the second configuration that is used for lower power modes can have a higher complexity that the first configuration. For example, a specific chip or optimised digital signal processing implementation could be provided for a second configuration whereas the first configuration might be implemented only in software. In such cases the second configuration could have a lower power requirement and also be more complex.

In some examples the second configuration can be selected based on at least one of, a transmission format used for audio signals received by the server 104 or an apparatus within the server 104, decoding capabilities of the participant device 106A, rendering capabilities of the participant device 106A, estimated duration of the communication session, analysis of content of the audio signals, or any other suitable factor or combination of factors. The decoding capabilities and/or rendering capabilities can comprise hardware acceleration. The hardware acceleration can provide for power savings.

The participant device 106A can provide an indication of the decoding capabilities of the participant device 106A to the server 104 or other suitable apparatus to enable the second configuration to be selected.

The analysis of the content of the audio signal can enable a determination of the type of audio characteristics that might help to provide a good user experience. For example, it can determine the number of participants 102 that are sharing a participant device 106. If there are multiple sources within the content then configurations that provide spatial features might be beneficial as this can improve the differentiability of the respective sources. Conversely if there is only a single source in the content then sufficient user experience quality can be provided without spatial features.

At block 206 the method comprises switching the configuration used for the audio stream 110 from the first configuration to the second configuration. After the switch has been made the audio stream 110 is provided in the second configuration.

In some examples the switching can occur immediately so that as soon as the determination of the second configuration is made the switch to the second configuration can be made. In other examples the switch can be delayed to occur at a specific point in time. The point in time at which the switch is made can be selected based on the power levels of the participant device 106A, the estimated time remaining in the telecommunication session or any other suitable factor or combination of factors.

In some examples the method can comprise additional blocks that are not shown in Fig. 2A. For example, the apparatus could determine two or more alternative configurations that can be used for the audio stream when the participant device 106A is in the low power mode. In such examples one of the alternative configurations could be used for a first time period and a second of the alternative configurations could be used for a second time period. In such cases the apparatus could determine a second configuration and a third configuration where the third configuration further reduces power consumption for the participant device 106A. The apparatus can also be arranged to switch the configuration used for the audio stream from the first configuration to the second configuration at a first time and to switching the configuration used for the audio stream from the second configuration to the third configuration at a second time.

In some examples the method can also comprise enabling an indication of the change of configuration to be sent to one or more other devices involved in the communication session. For example, the telecommunication system 100 could comprise distributed devices and the indication of the change could be forwarded to other devices. In some examples the change of the configuration could be sent to other participant devices 106 within the telecommunication system 100.

Fig. 2B shows another example method that can be used in examples of the disclosure. The example method could also be implemented using systems 100 such as the systems 100 of Figs. 1A and 1B or any other suitable system. The method of Fig. 2B could be implemented by a participant device 106A or an apparatus within a participant device 106A or any other suitable device. The method of Fig. 2B could be performed by a participant device 106A that is in a telecommunication session with an apparatus that performs the method of Fig. 2A.

At block 210 the method comprises receiving an audio stream 110 from an apparatus during a communication session. The communication session can be with at least the apparatus and any other suitable apparatus. The audio stream 110 is provided in a first configuration and the first configuration provides one or more audio characteristics.

At block 212 the method comprises determining to enter a power save mode. Any suitable trigger event can be used to cause the determining to enter the power save mode. In some examples the trigger event can comprise an input by a user of the participant device 106A, a determination that the power level of the participant device 106A has dropped below a threshold level, a determination that the power level of the participant device 106A is predicted to drop below a threshold level during the expected duration of the communication session and/or following any other suitable trigger event.

At block 214 the method comprises enabling transmission of an indication that the participant device 106A is to enter or has entered a power save mode. The indication is transmitted to the apparatus from which the audio stream 110 is received. The apparatus that receives the indication could perform the method of Fig. 2A or any other suitable method.

At block 216 the method comprises receiving the audio stream 110 in a second configuration wherein the second configuration reduces power consumption of the participant device 106A and maintains at least one of the one or more audio characteristics of the first configuration.

In some examples the participant device 106A can determine one or more configurations that can be used as the second configuration and enable transmission of an indication of the determined configurations to the apparatus. This can enable the participant device 106A to identify alternative configurations that can be used in the low power mode and inform the apparatus of alternative configuration.

The configurations that can be used as the second configuration can be determined based, at least in part, on one or more of, configurations negotiated during a session negotiation, decoding capabilities of the participant device, rendering capabilities of the participant device, estimated duration of a communication session and/or any other suitable factor.

Examples of the disclosure therefore address the problem of maintaining user experience in telecommunication systems while enabling a reduction in power use by providing a process of communicating a power saving request from the participant device 106A to the server 104 or any other suitable device and a process for the server 104 or other suitable apparatus to adjust the audio stream 110 that is to be transmitted to become a lower power audio stream 110 while retaining at least some of the audio characteristics that provide a sufficient quality of user experience.

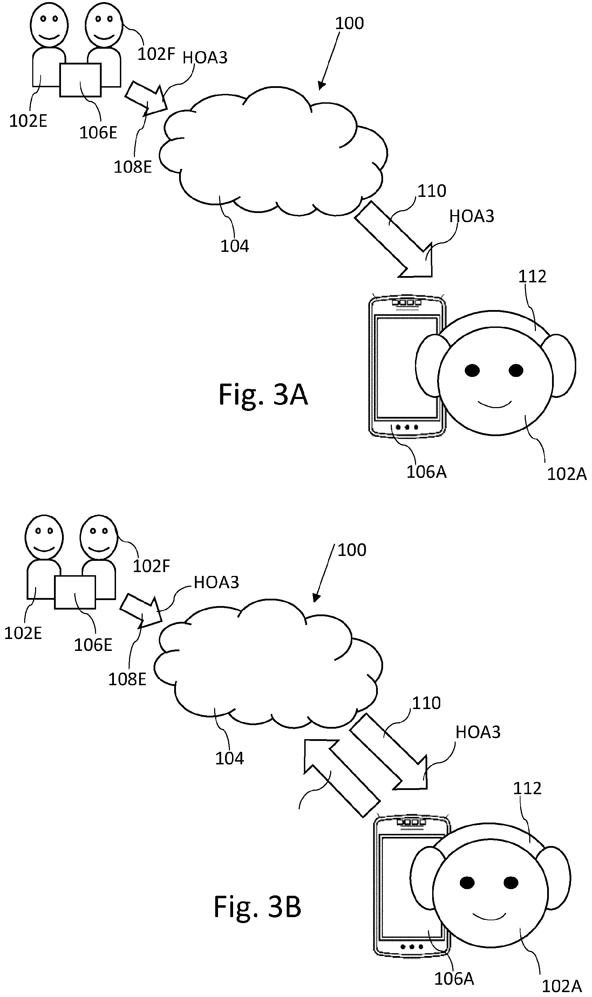

Figs. 3A to 3D show an example implementation of examples of the disclosure. In this example the IVAS codec is used. Any immersive and spatial codec could be used in other examples of the disclosure.

Fig. 3A shows the example telecommunication system 100. The telecommunication system 100 can be similar to the systems 100 shown in Fig. 1A and 1B. Corresponding reference numerals are used for corresponding features. Other arrangements for the telecommunication system 100 can be used in other examples. In this case there are only two participant devices 106 within the telecommunication system 100, but further participant devices 106 can join the telecommunication system 100 at any time.

In the example of Fig. 3A the telecommunication system 100 is used for a telecommunication session between two participant devices 106A and 106E. The first participant device 106A is used by a first participant 102A and the other participant device 106E is used by a multiple participants 102E, 102F. The other participant device 106E could be a teleconferencing device that can enable multiple participants within the same room to use the same device or could be any other suitable type of device. In the example of Fig. 1B two participants 102E, 102F are using the transmitting participant device 106E. More than two participants 106 can use the same participant device 106 in other examples.

In the example of Fig. 3A the first participant device 106A is used by the first participant 102A. The first participant device 106A is a mobile phone. Other types of devices could be used in other examples. Other types of participant device 106A that enable communication within a telecommunication session can be used in other examples. In this example the participant 102A is using a playback device 112 to listen to the audio. The playback device 112 can comprise a headset or any other suitable type of playback device. The playback device 112 can enable binaural audio, head tracked reproduction of audio or any other suitable type of spatial audio. The playback device 112 can enable an immersive audio experience for the participant 106.

The playback device 112 can be connected to the participant device 106A via a wired or wireless connection. In other examples the participant device 106A can be configured to playback the audio to the participant without a separate playback device.

In the example of Fig. 3A the other participant device 106E is used by multiple participants 102E, 102F. The other participant device 106E could be a teleconferencing device that can enable multiple participants within the same room to use the same device or could be any other suitable type of device.

In this example the transmitting participant device 106E sends an upstream signal 108E to the server 104 using a first configuration. The server 104 can send the audio stream 110 to the receiving participant device 106A using the same first configuration. In this example the first configuration is HOA3.

The format and other parameters that are to be used as the first configuration can be negotiated during session initiation. In this example the respective participant devices 106 can negotiate the use of HOA3 as this preserve the quality of the audio stream 110 and provide a receiving participant device 106A with a full set of options to, optimally or substantially optimally, render to different output format or configuration.

Fig. 3A shows the telecommunication system 100 at the start of the communication session. At this point no special power profiles or modes have been enabled. The participant devices 106 participate in the telecommunication session using the configurations that have been negotiated. In this example the configuration comprises a HOA3 format. Other configurations or formats could be used in other examples.

The receiving participant device 106A receives the audio stream 110 as a HOA3 audio stream. This could be an SBA stream. The audio stream 110 can be decoded and rendered into a fully immersive spatial binaural rendering with head tracking. The decoding and rendering of the audio stream can provide the highest available quality for the user experience.

Fig. 3B shows the same telecommunication system 100 at a later point in time. The telecommunication session is still ongoing and the configurations used for audio stream 110 have not changed. However, it is determined that the receiving participant device 106A is to enter or has entered a low power mode.

In some examples, the participant 102 using the receiving participant device 106A could determine that the power levels of the participant device 106A are running low and could make a user input to switch the participant device 106A into a low power mode.

In some examples the participant device 106A could be entered into a low power mode automatically without any input from the participant using the participant device 106A. for example, a controller of the participant device 106A can monitor the power levels of the participant device 106A and can arrange the participant device 106A in a low power mode if the power levels drop below a predetermined threshold.

In some examples, the controller can monitor the power levels and the expected power requirements for the participant device 106A when determining whether to enter the low mode. For example, the controller can consider the expected duration or remaining time of the telecommunication session and the power requirements for that and can use this information to determine whether, or at what time, to enter a low power mode.

When it is determined that the participant device 106A is to enter or has entered a low power mode an indication 300 is sent from the participant device 106A to the server 104. The indication indicates that participant device 106A is to enter or has entered a low power mode. The indication 300 can include other suitable information such as the power requirements of the participant device 106A, the time at which the low power mode is to be used, and/or any other suitable information.

The indication 300 can request a power saving audio stream 110 from the server in place of the audio stream 110 that is currently being used. In order to provide the power saving audio stream 110 the server 104 has to reconfigure the audio stream 110 into a different configuration.

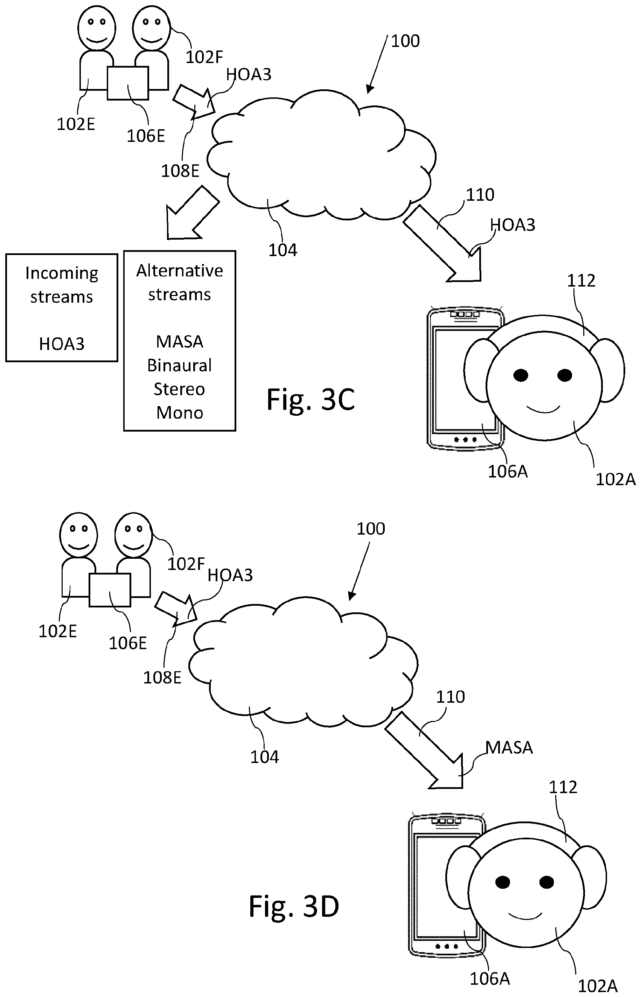

Fig. 3C shows the server 104 determining which configuration should be used for the low power audio stream 110. The low power audio stream 110 needs to have a lower complexity and require lower power usage for the receiving participant device 106A. the low power audio stream 110 needs to maintain audio characteristics that are present in the original audio stream 110. In some examples the audio characteristics can be maintained within a target range. This can allow for some variation in the audio characteristics between the first configuration and the second configuration provided that the variation is within a tolerable range. For example, the maintaining of the audio characteristics can comprise some changes in the audio characteristics but any changes would be within a predetermined range so as to maintain the audio characteristics above a threshold. The amount of change that can be tolerated within the audio characteristics can depend on the power saving requirements of the participant device 106A and/or any other suitable factors.

In some examples the maintaining of the audio characteristics can comprise the maintaining of spatial based features such as head tracking or reverberation.

Fig. 3C schematically shows the server 104 determining which configuration to use as the second configuration. In this example the determining comprises considering the incoming upstream signals 108E from the transmitting participant devices 106E. In this example there is only one incoming upstream signal 108E and this uses a HOA3 format. In examples where multiple upstream signals 108 are received then mixing or merging of the streams can be considered when constructing and audio stream 110 for transmission.

The HOA3 format requires high power consumption for the receiving participant device 106A to decode and render due to the number of channels in the format.

The server 104 can then consider the alternative configurations that can be used for the audio stream 110. The alternative configurations that are available can be determined based on the configurations of the upstream signal 108E and the decoding and rendering capabilities of the receiving participant device 106A and/or any other suitable factor. The decoding and rendering capabilities of the receiving participant device 106A can be communicated to the server during session negotiation or using any other suitable message. In this example, the alternative configurations for the audio stream 110 are MASA, Binaural, Stereo and Mono.

MASA format can provide equal, or substantially equal, immersive audio quality to a FOA or HOA format. The HOA3 upstream signal 108 can be converted to a MASA format. The MASA format also allows for spatial based features such as high-quality head-tracked binaural rendering which was in use in the initial stage of telecommunication session.

Binaural audio or pre-binauralized stereo format can provide externalization of the audio scene for the participant 102A. Binaural audio or pre-binauralized stereo reduces power consumption compared to the HOA3 format but also removes some of the spatial based features such as head-tracking capability.

The stereo format offers a stereo separation for sources. The HOA3 upstream signal 108 can be converted directly to a stereo format. The stereo format reduces power consumption compared to the HOA3 format but also removes some of the spatial based features such as head-tracking capability. In addition, the audio sources are not externalized as binaural rendering is not possible (or done beforehand).

Mono format offers the largest reduction in power consumption. The conversion from HOA3 to Mono format can be easily performed. However, Mono format completely removes spatial quality and characteristics from the rendering.

The server 104 selects an alternative configuration from the available configurations. The selected configuration can be one that maintains at least some of the audio characteristics of the first configuration. For example, the second configuration can be selected to preserve immersive spatial features while reducing power consumption so that even after the switch to the second configuration the participant 102A can continue with immersive audio content.

To make a selection of the configuration the server 104 can first reduce the list of available options and then select an option from the reduced list.

To reduce the list of available configurations the server 104 can consider the preferred configurations for the audio stream 110 of the receiving configuration device 106A. the preferred configurations can be communicated to the server 104 during session negotiation or any other suitable message. Configurations that are not indicated as being preferred or supported can be removed from the list and do not need to be considered by the server 104.

In some examples to reduce the list of available configurations the server 104 can consider the allowed options for format conversions or any other changes in the configurations. If a change from one format to another is not supported or increases complexity then the configurations relating to that format can be removed from the list.

In examples where mixing or merging of the audio streams has been requested the allowed options for format mixing can be considered. The mixing of the formats might be restricted to specific combinations that produce specific formats. Configurations using formats that are not one of these specific formats can be removed from the list.

In some examples the bitrate limitations of transmission channel can be considered. Some formats might not be available due to the transmission channel having a low bitrate. The configurations relating to these formats can be removed from the list.

The power profile of the receiving configuration device 106A can also be considered so that if the power requirements of the configuration are too high then the configuration can be removed from the list.

The alternative configuration can then be selected from the reduced list. In some examples the server 104 can select the alternative configuration with the highest capability level (or the most preferred) configuration of the configurations that are allowed in the negotiation.

In some examples the alternative configuration can be selected by finding an optimized solution of the following factors:
- Perceptual quality reduction of configuration conversion when rendering to allowed output configuration. A lower reduction is better. In some combinations, almost zero reduction is possible.
- Power use reduction of configuration conversion when rendering to preferred (or supported) output configurations.

The optimization between these factors can be done with any suitable optimization methods. Another approach is to train a machine learning model to select an appropriate configuration. The machine learning model could be trained with a large set of listening test results of the audio codec in use with various transmission and output configurations while also providing corresponding average power consumption cost data for each of the combinations. The training data could comprise data for multiple different types of receiving participation devices 106A.

In other example the available transmission configurations can be checked in decreasing order of quality until the desired reduction in power is achieved.

In some examples, the output format in use at the receiving participation device 106A is known by the server 104. This can enable the server 104 to optimizing for the exact output configuration instead of all the available options.

In some examples the transcoding costs of the server 104 might also be significant for the selection of the alternative configuration. In such cases the server 104 can use the transcoding costs as part of the optimization calculation. For example, if the server serves 104 multiple receiving participation devices 106A with the same audio stream 104, it is beneficial to transcode to a format which preserves the quality for all receiving participation devices 106A while fulfilling the power save request for the specific receiving participation device 106A.

In the example of Fig. 3C the server 104 selects to switch from HOA3 format to MASA format. This will reduce power consumption for the receiving participant device 106A while offering almost equal possibilities for further rendering.

The server 104 can negotiate a change of the configuration used for the audio stream 110 with the receiving participant device 106A before making the switch. In some cases a negotiation of the change is not needed because this could be negotiated during session initiation. The negotiation at session initiation could enable switching between configurations.

Once the server 104 has determined which configuration should be used for the low power mode and any required negotiations with the receiving participant device 106A the server can switch the configuration used for the audio stream 110 to the second configuration. This is shown in Fig. 3D where the transmitting participant device 106E sends an upstream signal 108E to the server 104 using HOA3 and the server 104 sends an audio stream 110 to the receiving participant device 106A using MASA. The configuration used for the upstream signals 108E does not need to change.

In the examples shown in Figs. 3A to 3D the server selects the configuration to be used for the low power mode based on the available alternative configurations. In some examples the server 104 could use additional information to select the configuration to be used for the low power mode.

For example, the server 104 could analyze the content of the audio stream 110 so that the selection of the configuration can be based on the content of the audio stream. The analysis of the content could determine if there are multiple audio sources, if the audio sources are in different locations, the types of audio sources and any other relevant information. The analysis of the content of the audio stream 110 can be used to distinguish between use cases where spatial information is of high importance and used cases where spatial information is of lower importance. As an example, if a single participant 102 is joining the telecommunication session using a participant device 106 with a special microphone setup, the spatial information is not as important compared to a situation where there are multiple moving talkers in a room with background music. It would be more acceptable to switch to a configuration using a mono format in the former case than in the latter case because the object transmission as a complex spatial scene does not offer any benefit when only a single source is present.

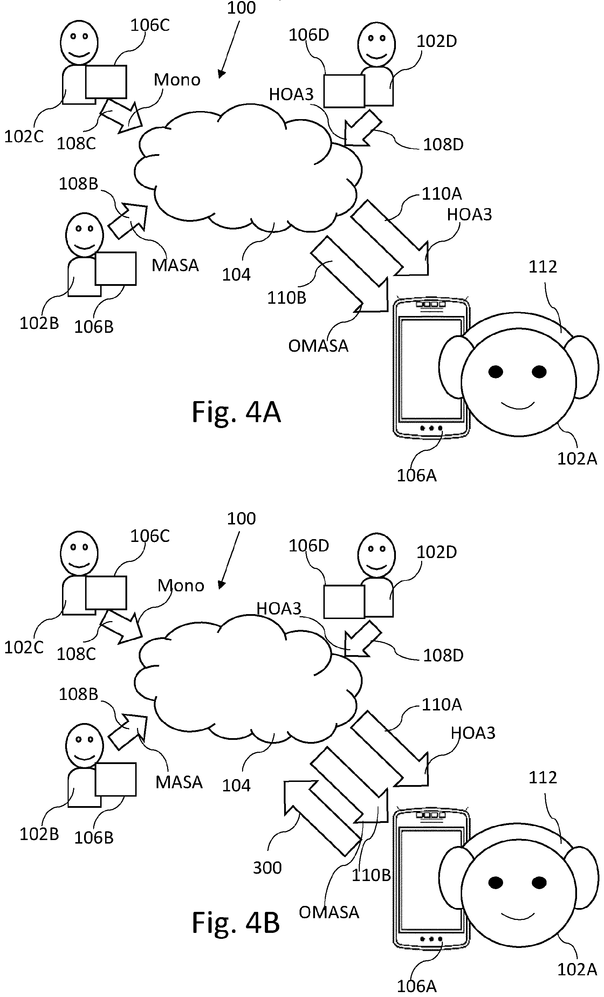

In the example of figs. 3A to 3D there where only two participant devices 106 in the telecommunication session. Figs. 4A to 4E show another example implementation of examples of the disclosure in which there are more than two participant devices 106 in the telecommunication session. In this example the IVAS codec is used. Any immersive and spatial codec could be used in other examples of the disclosure.

Fig. 4A shows the example telecommunication system 100. The telecommunication system 100 can be similar to the systems 100 shown in Fig. 1A and 1B. Corresponding reference numerals are used for corresponding features. Other arrangements for the telecommunication system 100 can be used in other examples.

Fig. 4A the telecommunication system 100 is used for a telecommunication session between four participant devices 106. Each of the participant devices 106 is used by a single participant 102. The participant devices 106 can comprise any suitable type of devices. The participant devices 106 could comprise teleconferencing devices, mobile telephones, personal computers or any other suitable type of devices that can be configured to capture audio and provide playback of audio signals to one or more participants 102.

In the example of Fig. 4A the receiving participant device 106A is used by the first participant 102A. The receiving participant device 106A is a mobile phone. Other types of devices could be used in other examples. Other types of participant device 106A that enable communication within a telecommunication session can be used in other examples. In this example the participant 102A is using a playback device 112 to listen to the audio. The playback device 112 can comprise a headset or any other suitable type of playback device. The playback device 112 can enable binaural audio, head tracked reproduction of audio or any other suitable type of spatial audio. The playback device 112 can enable an immersive audio experience for the participant 106.

The playback device 112 can be connected to the participant device 106A via a wired or wireless connection. In other examples the participant device 106A can be configured to playback the audio to the participant without a separate playback device.

In this example the transmitting participant devices 106B-D send upstream signals 108B-D to the server 104. The configurations used for the respective upstream signals 108B-D can be different for the different participant devices 106B-D. The configurations used for the respective upstream signals 108B-D can be determined during session negotiation. In the example of Fig. 4A the second participant device 106B can send an upstream signal 108B in a First Order Ambisonics (FOA) format, the third participant device 106C can send an upstream signal 108C in a Mono format and the fourth participant device 106D can send an upstream signal 108D in a Higher Order Ambisonics (HOA3) format. Other formats and configurations could be used in other examples.

The server 104 receives the upstream signals 108 and mixes them to provide an audio stream 110 for the receiving participant device 106A. In this example the server 104 provides multiple audio streams 110A, 110B to the receiving participant device 106A during the telecommunication session. The multiple audio streams 110A, 110B are transmitted at the same time. The multiple audio streams 110A, 110B can use different configurations. In this example the first audio stream 110A uses HOA3 format and the second audio stream 110B uses OMASA format. The HOA3 audio stream 110A can be an original upstream signal 108D from the fourth transmitting participant device 106D. The OMASA audio stream 110B can comprise a combination of the mono upstream signal 108C from the third participant device 106C and the MASA upstream signal 108B from the second participant device 106B. The combination of the mono and MASA signals is encoded using OMASA input format to result in an OMASA audio stream 110. In order to make this combination the server 104 can allocate a spatial position for the mono stream 108C to generate an audio object that can then be combined with the MASA stream 108B.

The receiving participant device 106A has instantiated two IVAS decoders and at least one renderer, which are used to decode and render the streams resulting in head-tracked binaural playback over the playback device 112.

Fig. 4A shows the telecommunication system 100 at the start of the communication session. At this point no special power profiles or modes have been enabled.

Fig. 4B shows the same telecommunication system 100 at a later point in time. The telecommunication session is still ongoing and the configurations used for audio stream 110 have not changed. However, it is determined that the receiving participant device 106A is to enter or has entered a low power mode. Any suitable trigger event can cause the receiving participant device 106A to enter the low power mode.

When it is determined that the participant device 106A is to enter or has entered a low power mode an indication 300 is sent from the participant device 106A to the server 104. The indication indicates that participant device 106A is to enter or has entered a low power mode. The indication 300 can include other suitable information such as the power requirements of the participant device 106A, the time at which the low power mode is to be used, and/or any other suitable information.

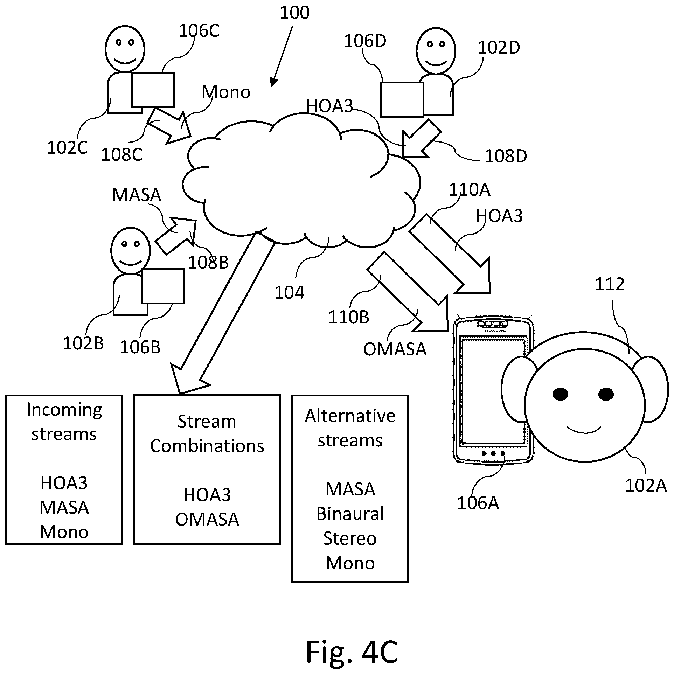

Fig. 4C shows the server 104 determining which configuration should be used for the low power audio streams 110A, 110B. The low power audio stream 110A, 110B needs to have a lower complexity and require lower power usage for the receiving participant device 106A. the low power audio stream 110 needs to maintain audio characteristics that are present in the original audio stream 110.

In this example the determining of the configuration to be used for the low power audio streams 110A, 110B is a two stage process. In a first stage of the process the server 104 can determine to combine the multiple audio streams 110A, 110B to switch to single stream transmission. This can be done by selecting a stream combination from the available stream combinations.

In this case the available formats for stream combinations are HOA3 and OMASA. The server 104 can select OMASA as an option for a combined stream.

The server can then determine if the combination provides sufficient complexity reduction so as to provide the required power savings at the receiving participant device 106A. If the combination does not provide the required power savings then the server can perform the second stage of the determining of a configuration.

In the second stage of the determining the server 104 considers the alternative configurations that can be used for a combined audio stream 110. The alternative configurations that are available can be determined based on the configurations of the upstream signals 108B-D and the decoding and rendering capabilities of the receiving participant device 106A and/or any other suitable factor. In this example, the alternative configurations for the combined audio stream 110 are MASA, Binaural, Stereo and Mono.

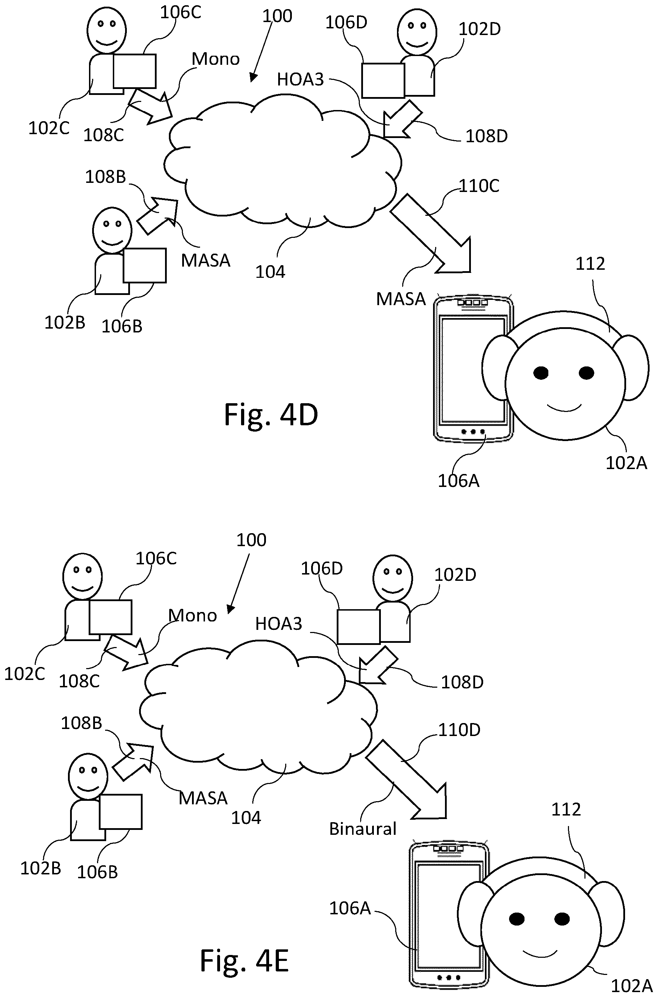

Once the server 104 has determined which configuration should be used for the low power mode and any required negotiations with the receiving participant device 106A the server can switch the configuration used for the audio stream 110 to the second configuration. This is shown in Fig. 4D where the transmitting participant devices 106B-D send upstream signals 108B-D to the server 104 using the original configurations and the server 104 sends an audio stream 110C to the receiving participant device 106A using MASA. The configuration used for the upstream signals 108E does not need to change. The configuration used for the audio stream 110C in the low power mode is changed in that it is now a single combined audio stream and also uses a different configuration to either of the configurations used for the original audio streams 110A, 110B.

Fig. 4D shows the receiving participant device 106A operating in a first low power mode. However, as the telecommunication session progresses it might be determined that the receiving participant device 106A needs to use an even lower power mode. In this case the examples shown in Figs. 4B and 4C can be repeated in that the receiving participant device 106A can transmit another indication 300 to the server 104 indicating that the receiving participant device 106A is to enter or has entered an even lower power mode. In response to this the server 104 can determine another configuration that is to be used to further conserve power at the receiving participant device 106A.

Fig. 4E shows the receiving participant device 106A operating in a second low power mode. In this second low power mode the server 104 has selected a binaural format for use in the configuration of the audio stream 110D. This has been selected as it provides further power savings compared to the MASA format used in Fig. 4D although it does not provide as high a user quality experience as the MASA format.

In some examples the server 104 can switch to the second low power configuration in response to a second indication from the receiving participant device 106A. That is, the receiving participant device 106A can provide an indication whenever it is to enter or has entered a lower power mode. In such examples the server 104 can make a determination of the configuration that is to be used when it receives the indications.

In some examples the receiving participant device 106A can send a single indication 300 that comprises information about multiple lower power modes. This could be a request for a multi stage power mode. For instance, it could indicate that a first low power mode is to be used from a first time and a second even lower power mode is to be used from a second time. In such examples sever 104 can make an indication of all of the different configurations to be used in response to the single indication and can make the appropriate switches at the appropriate times.

In some examples the server 104 could determine that a second lower power mode is to be used by the receiving participant device 106A without receiving an indication from the receiving participant device 106A. The server 104 could make such determinations using a timer or any other suitable means. For instance, when the original indication 300 that the receiving participant device 106A is to enter or has entered a low power mode is received the sever 104 can start a time. If a predetermined time interval expires without an indication from the receiving participant device 106A that normal power usage has been resumed, the server 104 can assume that the receiving participant device 106A has even lower power available and should enter an even lower power mode. In such cases the server 104 can select an alternative configuration for the audio stream 110D and switch to this configuration in response to the expiry of the timer. The time interval that is to be used can be determined based on information relating to the receiving participant device 106A. Such information could comprise, the type of device, the make and model of the device, the battery health of the device and/or any other suitable information.

In the above described examples the server 104 determines which configuration to use for the reduced power mode by selecting a configuration from the available configurations. In other examples the server 104 can determine which configuration to use by selecting a configuration requested by the receiving participant device 106A. In some examples the receiving participant device 106A could request one configuration. In some examples the request from the receiving participant device 106A could indicate multiple configurations and the server 104 can select one of the configurations from the multiple requested options.

In such examples the receiving participant device 106A can determine to enter the power save mode. This determination can be made following a user input or following monitoring of power levels or in response to any other suitable trigger event.

When the power save mode is activated the receiving participant device 106A inspects the power profiles for different configurations of the audio stream 110. The different configurations can comprise different transmission formats, different bitrates, different output formats, and/or any other different parameters or combinations of parameters. The power profile provides a measure of how much power is needed or consumed by the receiving participant device 106A when the respective configurations are used by the telecommunication system 100.

The receiving participant device 106A can compare the power profiles for the different configurations. The receiving participant device 106A can use the power profiles to identify a preferred configuration or a list of acceptable configurations. If a list of configurations is provided this can be provided in order of preference. The preferred configuration can be the configuration that provides sufficient power saving while maintaining the highest levels of quality for user experience.

The receiving participant device 106A can send a request to the sever 104 to switch to a different configuration. The request can comprise an indication of the preferred configuration and/or a list of acceptable configurations. In some examples the request can include an indication that the change in configuration is being requested for power saving reasons.

When the server 104 receives the request from the receiving participant device 106A it inspects the request for the requested power saving configurations. If the request comprises a list of configurations then the server 104 can select a configuration from the list. The configuration can be selected based on the configuration that would provide the best quality while saving sufficient power. If there are equal quality and power profiles for two or more configurations then the configuration preferred by the receiving participant device 106A would be selected.

In some examples when the receiving participant device 106A sends the indication 300 to the server 104 that it is to enter or has entered the low power mode the indication 300 can comprise information that can be used by the server 104 to determine the level of power reduction that is needed. Such information could include the expected or estimated remaining time of the telecommunication session. The time remaining in the telecommunication session could be estimated based on calendar information or a scheduled end time of the telecommunication session. The server 104 can use this information to use this additional information to determine the level of power reduction that is needed and select an alternative configuration that can provide this reduction. For example, if the server 104 is aware of the estimated remaining time of the telecommunication session then it can choose a configuration that can provide the required audio quality characteristics for at least the remaining time.

In some examples the information that can be used by the server 104 to determine the level of power reduction that is needed can comprise information relating to the codec and renderer used by the receiving participation device 106A. This information could comprise and identifier of the implementations, information relating to different power profiles for different configurations, and/or any other suitable information. In some examples this information might not be available to the server 104. In such examples the server can determine the configurations to be used based on the expected power profiles or a standard specification.

The power profile and power usage is inherently connected to the complexity of the configurations used for the audio stream 110. Therefore, parameters other than the power profile could be used to provide similar results. For example, a parameter that provides an indication of the complexity could be used in place of a power profile.

In some examples the server 104 can enable an indication of the change in the configuration be sent to other devices within the communication session. For example, this could be sent to one or more of the transmitting participant devices 106B-106E to enable changing of a transmission format at a point of origin. This can improve quality of transmission throughout the chain and possibly reduce bandwidth used. This can also allow preservation of a format from the transmitting configuration device 106B-E to the receiving configuration device 106A. This can be an advantage if there was no specific use for the transmitting participant devices 106B-E to select the original configuration.

In the above examples the different configurations comprise different formats. In some examples the server 104 can make other changes to the audio stream 110 instead of, or in addition to, changing the format. For example, changing the bitrate, audio bandwidth or content of metadata can also provide a reduction in power usage of the receiving configuration device 106A.

An example of reducing bitrate to conserve power in IVAS is the SBA format at bitrate 96 kbps and rendering to binaural output. In this case, change in bitrate to 80 kbps would provide almost equal perceptual quality, reduce power consumption (due to change in binaural rendering algorithm and reduction in number of transport channels). This change in configuration does not require any transcoding at the server 104 and so can also maintain efficiency at the server 104. The step of reducing bitrate can be used before general optimization procedures as described above or as part of any other processes for selecting a configuration.

Changing the content of metadata can provide power reduction because the contents of the metadata affect the complexity of the rendering. A simple way of reducing power consumption using format such as MASA is to zero out the coherence parameters and reduce number of concurrent directions from two to one. This has a significant effect on the operations needed for rendering which in turn causes a significant reduction in power consumption.

In the above descriptions, the server 104 controls the switching of the configurations of the audio stream 110 based on an indication received from the receiving participant device 106A. In other examples these functions could be performed by other devices or combinations of devices within the telecommunication system 100.

In the above examples the participants 102 are shown as people using participant devices. In other examples the participants 102 could be non-human. For example, the participants could comprise pre-recorded content or streamed content such as a podcast or audio book or audio guide. In some examples the participant could comprise a generative Al model that is arranged to generate audio content. The audio content could be stored in a participant device 106 and accessed through the telecommunication system 100

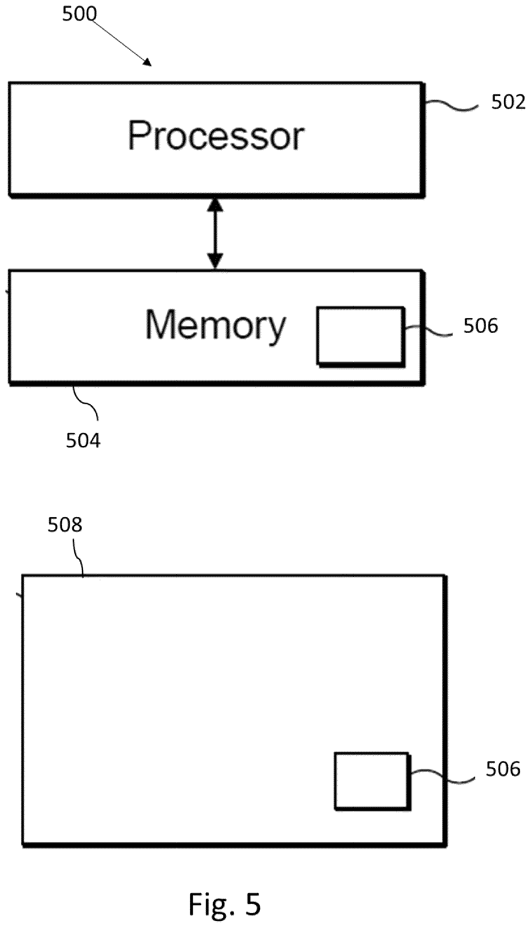

Fig. 5 shows an example controller 500 that can be used in some examples of the disclosure. The controller can 500 can be provided within participant devices 106, servers 104 or other apparatus as described herein. In some examples the controller 500 can provide apparatus for implementing examples of the disclosure.

Implementation of the controller 500 may be as controller circuitry. The controller 500 may be implemented in hardware alone, have certain aspects in software including firmware alone or can be a combination of hardware and software (including firmware).

As illustrated in Fig. 5 the controller 500 can be implemented using instructions that enable hardware functionality, for example, by using executable instructions 506 in a general-purpose or special-purpose processor 502 that may be stored on a machine readable storage medium (disk, memory etc.) to be executed by such a processor 502.

The processor 502 is configured to read from and write to the memory 504. The processor 502 may also comprise an output interface via which data and/or commands are output by the processor 502 and an input interface via which data and/or commands are input to the processor 502.

The memory 504 stores instructions 506, program or code that controls the operation of an apparatus when loaded into the processor 502. The instructions 506, program or code, provide the logic and routines that enable the apparatus to perform the methods illustrated in the accompanying Figs and/or as described herein. The processor 502 by reading the memory 504 is able to load and execute the instructions 506, program or code.

The apparatus comprises:
at least one processor 502; and
at least one memory 504 storing instructions 506 that, when executed by the at least one processor 502, cause the apparatus at least to:
   providing 200 an audio stream to a participant device during a communication session with at least the participant device wherein the audio stream is provided in a first configuration and the first configuration provides one or more audio characteristics;
   receiving 202 an indication from the participant device that the participant device is to enter or has entered a power save mode;
   determining 204 a second configuration for the audio stream wherein the second configuration reduces power consumption of the participant device and maintains at least one of the one or more audio characteristics of the first configuration within a target range; and
   switching 206 the configuration used for the audio stream from the first configuration to the second configuration.

The participant device 106 comprises:
at least one processor 502; and
at least one memory 504 storing instructions 506 that, when executed by the at least one processor 502, cause the apparatus at least to:
   receiving 210 an audio stream from an apparatus during a communication session with at least the apparatus wherein the audio stream is provided in a first configuration and the first configuration provides one or more audio characteristics;
   determining 212 to enter a power save mode;
   enabling 214 transmission of an indication that the participant device is to enter or has entered a power save mode to the apparatus;
   receiving 216 the audio stream in a second configuration wherein the second configuration reduces power consumption of the participant device and maintains at least one of the one or more audio characteristics of the first configuration.

As illustrated in Fig. 5 the instructions 506, program or code can arrive at the apparatus via any suitable delivery mechanism 508. The delivery mechanism 508 can be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program, the instructions 506, program or code. The delivery mechanism may be a signal configured to reliably transfer the computer program the instructions 506, program or code. The apparatus may propagate or transmit the computer program the instructions 506, program or code as a computer data signal.

The term "non-transitory," as used herein, is a limitation of the medium itself (that is, tangible, not a signal) as opposed to a limitation on data storage persistency (that is, RAM vs. ROM).

Computer program instructions for causing an apparatus to perform at least the following or for performing at least the following:
providing 200 an audio stream to a participant device during a communication session with at least the participant device wherein the audio stream is provided in a first configuration and the first configuration provides one or more audio characteristics;
receiving 202 an indication from the participant device that the participant device is to enter or has entered a power save mode;
determining 204 a second configuration for the audio stream wherein the second configuration reduces power consumption of the participant device and maintains at least one of the one or more audio characteristics of the first configuration within a target range; and
switching 206 the configuration used for the audio stream from the first configuration to the second configuration.

Computer program instructions for causing a participant device 106 to perform at least the following or for performing at least the following:
receiving 210 an audio stream from an apparatus during a communication session with at least the apparatus wherein the audio stream is provided in a first configuration and the first configuration provides one or more audio characteristics;
determining 212 to enter a power save mode;
enabling 214 transmission of an indication that the participant device is to enter or has entered a power save mode to the apparatus;
receiving 216 the audio stream in a second configuration wherein the second configuration reduces power consumption of the participant device and maintains at least one of the one or more audio characteristics of the first configuration.

The computer program instructions may be comprised in a computer program, a non-transitory computer readable medium, a computer program product, a machine readable medium. In some but not necessarily all examples, the computer program instructions may be distributed over more than one computer program.

Although the memory 504 is illustrated as a single component/circuitry it may be implemented as one or more separate components/circuitry some or all of which may be integrated/removable and/or may provide permanent/semi-permanent/ dynamic/cached storage.

Although the processor 502 is illustrated as a single component/circuitry it may be implemented as one or more separate components/circuitry some or all of which may be integrated/removable. The processor 502 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi-processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory or memories that work together to cause an apparatus, such as a mobile phone or server, to perform various functions and
(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the accompanying Figs may represent steps in a method and/or sections of code in the computer program or instruction 506. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to 'comprising only one...' or by using 'consisting.'

In this description, the wording 'connect', 'couple' and 'communication' and their derivatives mean operationally connected/coupled/in communication. It should be appreciated that any number or combination of intervening components can exist (including no intervening components), i.e., to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database, or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can', or 'may' refers to a particular instance in a class of examples. A property of the instance can be a property of only that instance or a property of the class or a property of a sub-class of the class that includes some but not all the instances in the class. It is therefore implicitly disclosed that a feature described with reference to one example but not with reference to another example, can where possible be used in that other example as part of a working combination but does not necessarily have to be used in that other example.

As used herein, "at least one of the following:" and "at least one of " and similar wording, where the list of two or more elements are joined by "and" or "or" mean at least any one of the elements, or at least any two or more of the elements, or at least all the elements.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

The description of a feature, such as an apparatus or a component of an apparatus, configured to perform a function, or for performing a function, should additionally be considered to also disclose a method of performing that function. For example, description of an apparatus configured to perform one or more actions, or for performing one or more actions, should additionally be considered to disclose a method of performing those one or more actions with or without the apparatus.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance the Applicant may seek protection via the claims in respect of any patentable feature or combination of features hereinbefore referred to and/or shown in the drawings whether or not emphasis has been placed thereon.

## Claims

1. An apparatus comprising means for:
providing an audio stream to a participant device during a communication session with at least the participant device wherein the audio stream is provided in a first configuration and the first configuration provides one or more audio characteristics;
receiving an indication from the participant device that the participant device is to enter or has entered a power save mode;
determining a second configuration for the audio stream wherein the second configuration reduces power consumption of the participant device and maintains at least one of the one or more audio characteristics of the first configuration within a target range; and
switching the configuration used for the audio stream from the first configuration to the second configuration.

2. The apparatus according to claim 1 wherein the first configuration comprises a first format and the second configuration comprises a second format.

3. The apparatus according to claim 1 wherein the first configuration comprises first parameters within a format and the second configuration comprises second parameters within the same format.

4. The apparatus according to claim 3 wherein the parameters comprise at least one of:
bit rates;
audio bandwidth; or
content within metadata.

5. The apparatus according to any preceding claim wherein determining a second configuration comprises selecting a configuration from multiple available configurations wherein the selection is based, at least in part, on estimated power use.

6. The apparatus according to claim 5 wherein the multiple available configurations are negotiated during a session negotiation with the participant device.

7. The apparatus according to any preceding claim wherein determining a second configuration comprises selecting a configuration from one or more configurations requested by the participant device.

8. The apparatus according to any of claims 5 to 7 wherein the second configuration is selected based on at least one of:
a transmission format used for audio signals received by the apparatus;
decoding capabilities of the participant device;
rendering capabilities of the participant device;
estimated duration of a communication session; or
analysis of content of the audio signals.

9. The apparatus according to any preceding claim wherein the means are for determining a third configuration for the audio stream wherein the third configuration further reduces power consumption for the participant device and switching the configuration used for the audio stream from the first configuration to the second configuration at a first time and the means are also for switching the configuration used for the audio stream from the second configuration to the third configuration at a second time.

10. The apparatus according to any preceding claim wherein the means are for enabling an indication of the change of configuration to be sent to one or more other devices involved in the communication session.

11. The apparatus according to any preceding claim wherein the audio characteristics comprise at least one of:
spatial audio; or
perceived audio quality metrics.

12. The apparatus according to any preceding claim wherein the first configuration enables spatial based features, wherein the spatial based features comprise at least one of:
head tracking; or
reverberation.

13. The apparatus as claimed in claim 12 wherein the second configuration does not enable spatial based features.

14. A participant device comprising means for:
receiving an audio stream from an apparatus during a communication session with at least the apparatus wherein the audio stream is provided in a first configuration and the first configuration provides one or more audio characteristics;
determining to enter a power save mode;
enabling transmission of an indication that the participant device is to enter or has entered a power save mode to the apparatus;
receiving the audio stream in a second configuration wherein the second configuration reduces power consumption of the participant device and maintains at least one of the one or more audio characteristics of the first configuration.

15. The participant device according to claim 14 wherein the means are for determining one or more configurations that can be used as the second configuration and enabling transmission of an indication of the determined configurations to the apparatus.
